(19) Europäisches Patentamt / European Patent Office / Office européen des brevets

(11) **EP 4 060 213 A1**

(12) **EUROPEAN PATENT APPLICATION**
published in accordance with Art. 153(4) EPC

(43) Date of publication:
**21.09.2022 Bulletin 2022/38**

(21) Application number: **20888426.2**

(22) Date of filing: **11.11.2020**

(51) International Patent Classification (IPC):
**F16L 13/14** (2006.01)　　**B21D 39/04** (2006.01)
**B21D 51/16** (2006.01)　　**F16L 19/04** (2006.01)

(52) Cooperative Patent Classification (CPC):
**B21D 39/04; B21D 51/16; F16L 13/14; F16L 19/04**

(86) International application number:
**PCT/JP2020/042088**

(87) International publication number:
**WO 2021/095772 (20.05.2021 Gazette 2021/20)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.11.2019 JP 2019206452**

(71) Applicant: **Usui Co., Ltd.**
**Sunto-gun, Shizuoka 411-8610 (JP)**

(72) Inventor: **SEINO, Iichiro**
**Sunto-gun, Shizuoka 411-8610 (JP)**

(74) Representative: **Louis Pöhlau Lohrentz**
**Patentanwälte**
**Merianstrasse 26**
**90409 Nürnberg (DE)**

(54) **FLARE FITTING STRUCTURE AND FLARED TUBING MANUFACTURING METHOD**

(57)　A flare fitting structure capable of preventing irregularity on a flare inclined plane of a flared tube and maintaining a high seal surface pressure is provided.

In a flare fitting structure (1) in which a flared portion (12) that is formed in an end of a flared tube (10) and faces a connected member (2) is pressed by a flared nut (3) to connect the flared tube (10) to the connected member (2), the flared tube (10) is formed by flaring a cylindrical tube (40) including an original tube (41) and a coating layer (42) that coats a surface of the original tube (41), the flared portion (12) includes a flare inclined plane (13) that faces the connected member (2), and the flare inclined plane (13) is formed with a machining portion (43) in which the original tube (41) is exposed by a machining operation.

FIG.4

EP 4 060 213 A1

# Description

## TECHNICAL FIELD

This disclosure relates to a flare fitting structure and a method of manufacturing a flared tube.

## BACKGROUND ART

A flare fitting structure is conventionally known (see e.g., Patent Literature 1). The flare fitting structure is configured to connect a flared tube to a connected member by fastening a flared nut when a flared portion formed in an end of the flared tube contacts a contact surface of the connected member.

## CITATION LIST

Patent Literature

Patent Literature 1: JP2008-190580A

## SUMMARY

Technical Problem

In the conventional flare fitting structure, a flare inclined plane of the flared portion facing the contact surface is pressed into the connected member to be sealed. If the flare inclined plane has an irregularity, a gap is created between the flare inclined plane and the connected member, which bothers the maintenance of a seal surface pressure.

The present disclosure has been made in view of the above problem, and an object of the present disclosure is to provide a flare fitting structure and a method of manufacturing a flared tube capable of preventing the irregularity on the flare inclined plane of the flared tube and maintaining a high seal surface pressure.

Solution to Problem

To solve the above problem, the present disclosure provides a flare fitting structure in which a flared portion formed in an end of a flared tube faces a connected member and the flared portion is pressed by a flared nut to connect the flared tube to the connected member, wherein the flared tube is formed by flaring an end of a cylindrical tube including an original tube and a coating layer that coats a surface of the original tube, the flared portion includes a flare inclined plane that faces the connected member, and the flare inclined plane is formed with a machining portion in which the original tube is exposed by a machining operation.

To solve the above problem, the present disclosure also provides a method of manufacturing a flared tube, including: a machining operation step of forming a machining portion having an outer diameter smaller than that of an original tube in a tube end portion of a cylindrical tube by cutting a predetermined area of an outer circumferential surface of the cylindrical tube including the original tube and a coating layer that coats a surface of the original tube in an axial direction from an end edge; and a flaring step of forming a flare inclined plane of a flared portion that faces a connected member with the machining portion by forming the flared portion in the tube end portion by pressing the machining portion.

Advantageous Effects

Accordingly, a flare fitting structure and a method of manufacturing a flared tube according to the present disclosure, irregularity on a flare inclined plane of a flared tube can be prevented, and a high seal surface pressure can be maintained.

## BRIEF DESCRIPTION OF DRAWINGS

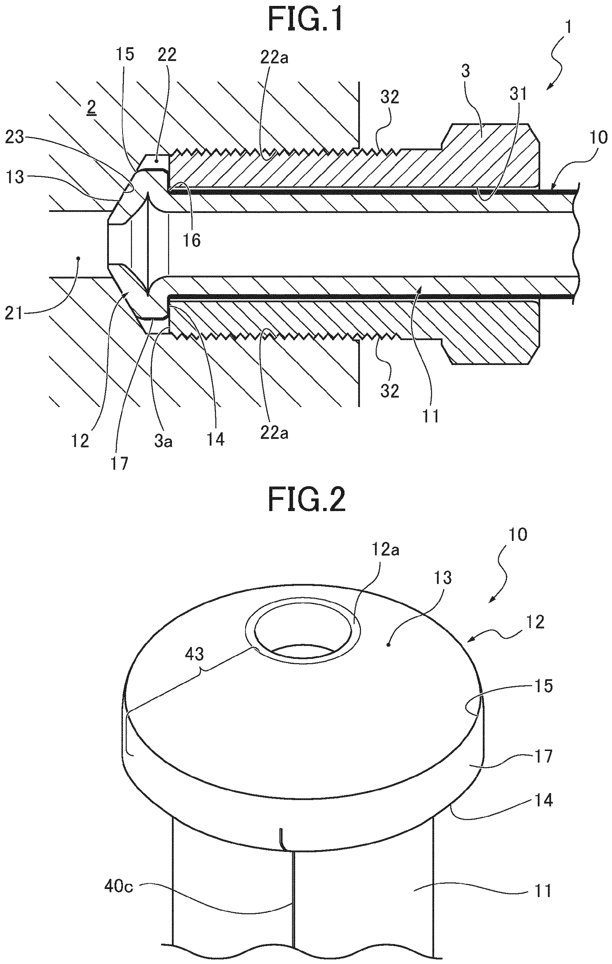

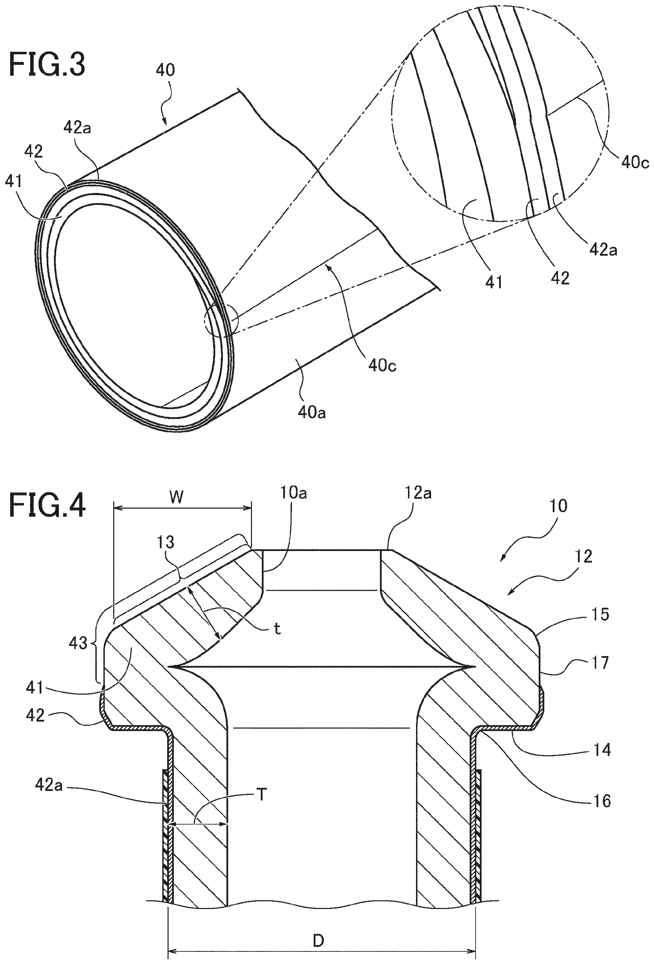

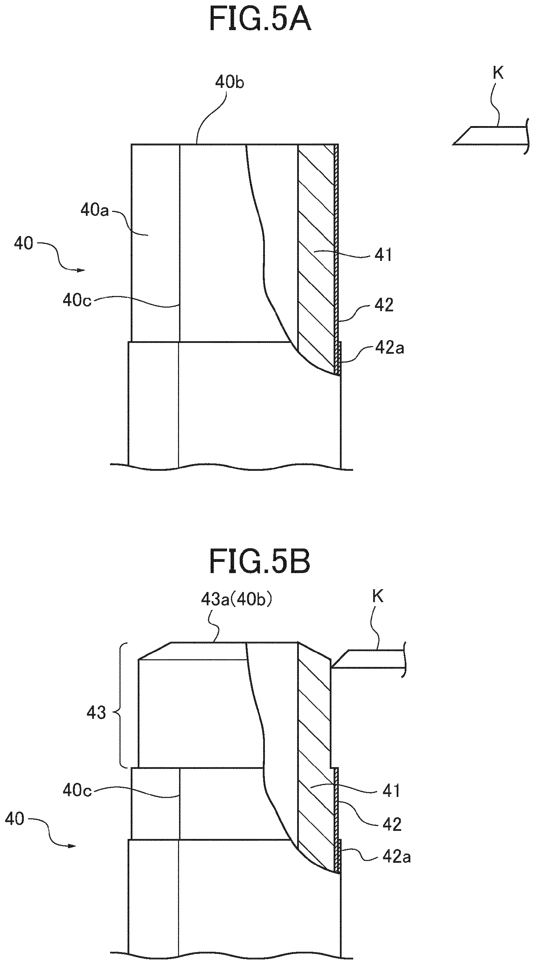

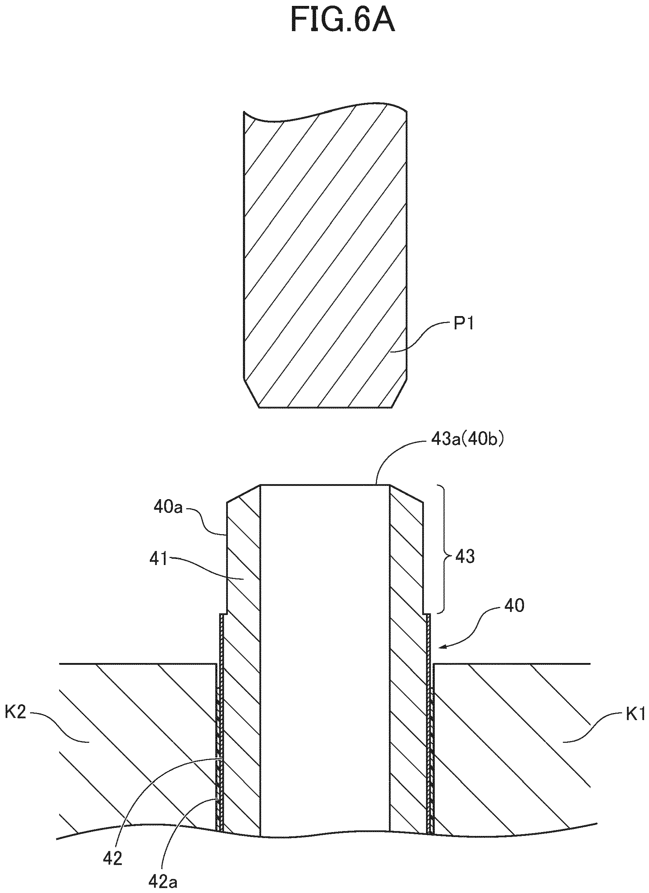

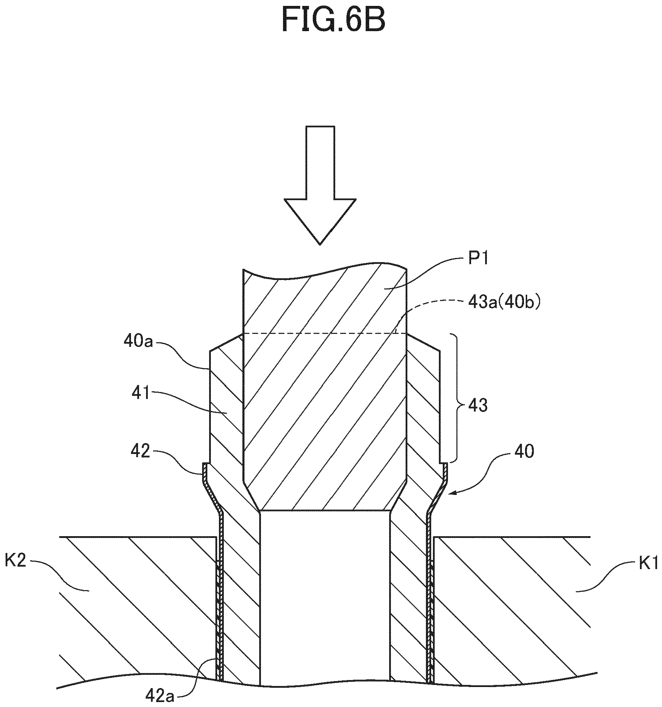

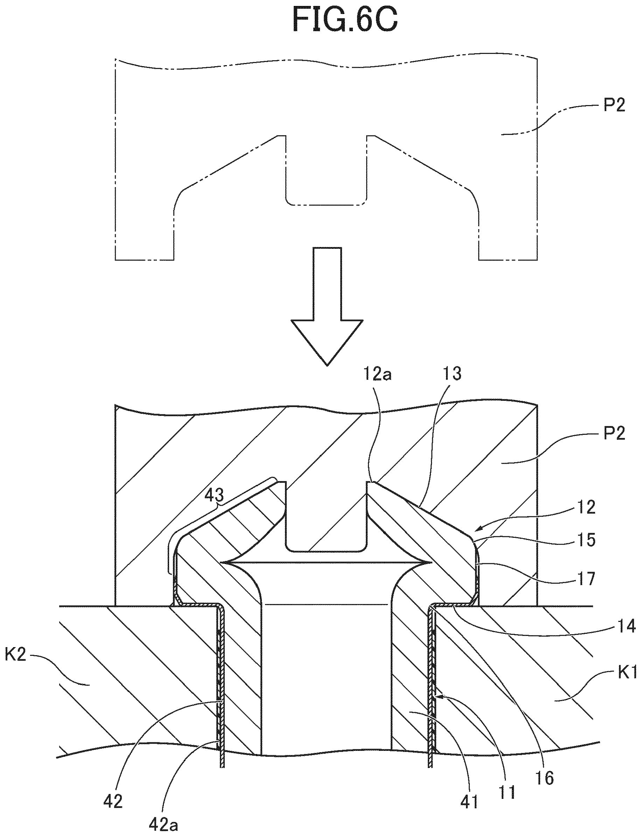

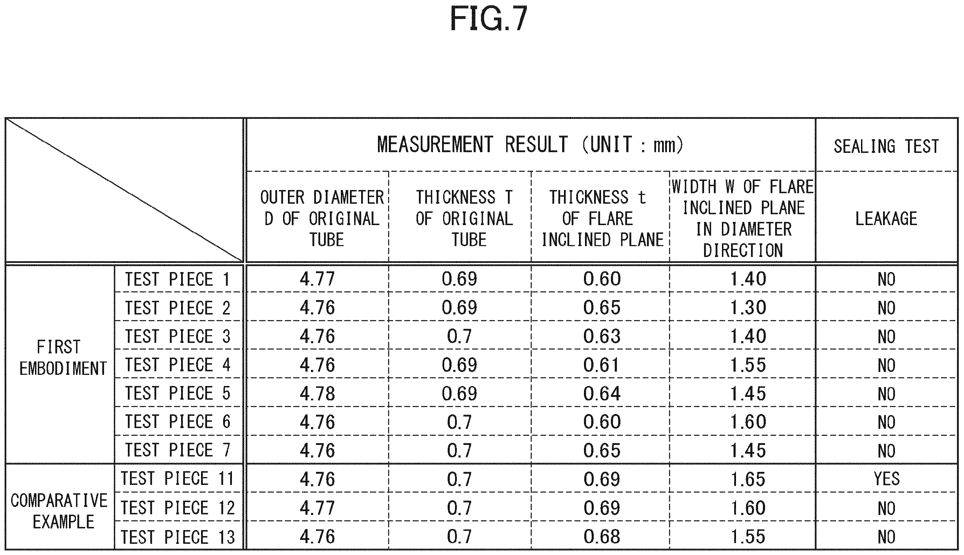

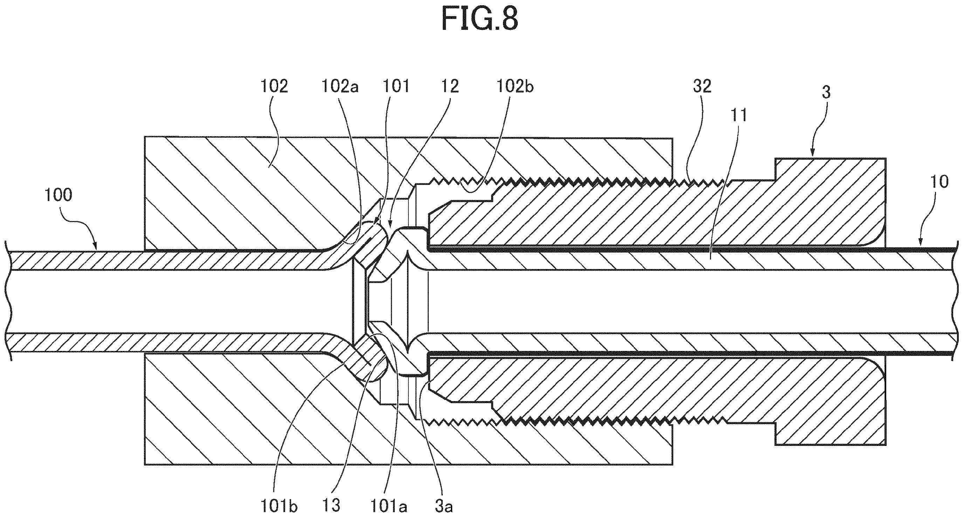

FIG. 1 is a longitudinal section illustrating a flare fitting structure of a first embodiment. FIG. 2 is a perspective view illustrating a main portion of a flared tube of the first embodiment. FIG. 3 is a perspective view illustrating a cylindrical tube used as the flared tube of the first embodiment. FIG. 4 is a longitudinal section of the flared tube of the first embodiment. FIG. 5A is an explanation drawing illustrating a previous process (peeling process) of a machining operation step of a method of manufacturing the flared tube of the first embodiment. FIG. 5B is an explanation drawing illustrating a machining process of the machining operation step of the method of manufacturing the flared tube of the first embodiment. FIG. 6A is an explanation drawing illustrating a cylindrical tube chucked state of a flaring step of the method of manufacturing the flared tube of the first embodiment. FIG. 6B is an explanation drawing illustrating a diameter enlarging process of the flaring step of the method of manufacturing the flared tube of the first embodiment. FIG. 6C is an explanation drawing illustrating a cold press process of the flaring step of the method of manufacturing the flared tube of the first embodiment. FIG. 7 is a table showing results of sealing tests in the flare fitting structure of the first embodiment and a flare fitting structure of a comparative example. FIG. 8 is a longitudinal section illustrating an example that connects the flared tube of the first embodiment to a steel tube having a double flared portion.

## DESCRIPTION OF EMBODIMENTS

Hereinafter, an embodiment of a flare fitting structure and a method of manufacturing a flared tube of the present disclosure will be described based on a first embodiment illustrated in the drawings.

First Embodiment

A flare fitting structure 1 of the first embodiment is a fitting structure of a pipe in a flow channel for pressurized liquid, which is used for a high-pressure fuel supply passage of an internal combustion engine and a force-feed line for brake fluid, for example. Hereinafter, an entire configuration of the flare fitting structure 1 of the first embodiment will be described.

As illustrated in FIG. 1, the flare fitting structure 1 of the first embodiment includes a flared tube 10, a connected member 2 to which the flared tube 10 is connected, and a flared nut 3 that presses the flared tube 10.

The connected member 2 is an on-board equipment such as an ABS actuator, and includes inside thereof a flow channel 21 and a connection port 22 that opens the flow channel 21 outside. The connection port 22 is a space having a diameter larger than that of the flow channel 21, and includes on an inner circumferential surface thereof a screw groove 22a. The periphery of the opening portion of the flow channel 21 in a bottom of the connection port 22 is provided with a sealing surface 23 that surrounds the flow channel 21. The sealing surface 23 is a contact surface that liquid tightly maintains the connection portion of the flared tube 10 and the flow channel 21 of the connected member 2 when an after-described flare inclined plane 13 of the flared tube 10 contacts the sealing surface 23. The sealing surface 23 has a tapered shape on the basis of the standards of the International Organization for Standardization (ISO) and the Japanese Automotive Standards Organization (JASO).

The flared tube 10 includes a cylindrical main tube portion 11 that penetrates through a through-hole 31 of the flared nut 3 and a flared portion 12 that is formed in the end of the main tube portion 11 and is inserted into the connection port 22 of the connected member 2. The flared portion 12 has a flared shape on the basis of the standards of the International Organization for Standardization (ISO) and the Japanese Automotive Standards Organization (JASO). More specifically, the flared portion 12 is press-formed to enlarge a diameter near the end of the main tube portion 11 and project the whole circumference near the end outside.

The flared nut 3 is inserted into the connection port 22 of the connected member 2, so that a leading end 3a contacts the flared portion 12. A screw groove 32 is formed on the outer circumferential surface of the flared nut 3. When the flared nut 3 is inserted into the connection port 22, the screw groove 32 is screwed on a screw groove 22a formed on the inner circumferential surface of the connection port 22.

In this flare fitting structure 1, firstly, the flared portion 12 of the flared tube 10 is inserted into the connection port 22 of the connected member 2, so that the flared portion 12 faces the sealing surface 23. Secondly, the screw groove 32 of the flared nut 3 is screwed on the screw groove 22 formed in the connection port 22 to fasten the flared nut 3. The flared portion 12 is thereby sandwiched between the leading end 3a of the flared nut 3 and the sealing surface 23 formed on the periphery of the opening portion of the flow channel 21, and the flared tube 10 is connected to the connected member 2.

Hereinafter, the detailed configurations of the flared tube 10 and the flared portion 12 will be described based on FIGS. 2 to 4.

As described above, the flared tube 10 includes the cylindrical main tube portion 11 and the flared portion 12 formed in the end of the main tube portion 11 (refer to FIGS. 1, 2). The flared tube10 is formed by flaring a tube end portion 40a of a cylindrical tube 40 having open both ends. As illustrated in FIG. 3, the cylindrical tube 40 includes an original tube 41 and a coating layer 42 that coats the surface of the original tube 41.

A tubular formed double-seamed steel tube in which a steel plate having a copper plating surface is double seamed is used for the original tube 41. The surface of the original tube 41 has a seam part step along the side edge of the double-seamed copper plating steel plate. The seam part step is a level difference extending in the axial direction of the original tube 41, and is created over the entire length of the original tube 41. As enlarged in FIG. 3, with the seam part step on the original tube 41, an irregularity portion 40c extending in the axial direction is formed on the outer circumferential surface of the cylindrical tube 40. Steel is suitable as the material for the original tube 41. However, the material for the original tube 41 is not limited thereto, and a metal tube made of a material selected from various alloys such as an iron alloy and aluminum may be used for the original tube 41.

After the surface of the original tube 41 is galvanized, for example, the coating layer 42 is provided by a trivalent chromate process. The thickness of the coating layer 42 is set to 10 to 30 $\mu$m, for example. The surface of the coating layer 42 is covered by a resin layer 42a of nylon, for example.

As illustrated in FIGS. 2, 4, the flared portion 12 includes an opening periphery edge portion 12a that surrounds the periphery of the opening portion 10a, a flare inclined plane 13 that surrounds the opening periphery edge portion 12a and faces the sealing surface 23 of the connected member 2, a back surface 14 that is pressed by the leading end 3a of the flared nut 3, a first bent portion 15 located between the flare inclined plane 13 and a flare outside surface 17, and a second bent portion 16 located between the back surface 14 and the main tube portion 11.

As illustrated in FIG. 2, at least the flare inclined plane 13 of the flared portion 12 is formed with a machining portion 43 that is formed on the circumferential surface of the cylindrical tube 40 and in which the circumferential surface of the original tube 41 is exposed by a machining operation. As illustrated in FIG. 4, in the flared tube 10 of the first embodiment, the flare inclined plane 13 and the area to the first bent portion 15 are formed with the machining portion 43, and the circumferential surface of the original tube 41 is exposed. The opening periphery edge portion 12a is formed with the end surface of the original tube 41, and the end surface of the original tube 41 is exposed in the opening periphery edge portion 12a.

The back surface 14 of the flared portion 12 is covered by the coating layer 42. The surface of the area of the main tube portion 11 slightly separated from the second bent portion 16 is covered by the resin layer 42a. The machining portion 43 is previously provided in the tube end portion 40a of the cylindrical tube 40 before forming the flared portion 12 by flaring the cylindrical tube 40.

In the flared portion 12 of the first embodiment, a width W of the flare inclined plane 13 in the diameter direction relative to an outer diameter D of the original tube 41 is set to establish the following formula 1.

$$0.27D \leq W \leq 0.34D \quad \ldots \text{Formula 1}$$

In the flared portion 12 of the first embodiment, a thickness t of the flare inclined plane 13 relative to a thickness T of the original tube 41 is set to establish the following formula 2.

$$0.85T \leq t \leq 0.95T \quad \ldots \text{Formula 2}$$

The thickness t of the flare inclined plane 13 is the thickness of the center portion of the flare inclined plane 13 in the diameter direction. However, the thickness t is not limited thereto. The thickness t may be, for example, the average value of the thicknesses of a plurality of portions of the flare inclined plane 13.

Hereinafter, the method of manufacturing the flared tube 10 of the first embodiment will be described based on FIGS. 5, 6. More specifically, the method of manufacturing the flared tube 10 of the first embodiment includes a machining operation step illustrated in FIGS. 5A, 5B and a flaring step illustrated in FIGS. 6A to 6C.

In the machining operation step, a predetermined area of the outer circumferential surface of the cylindrical tube 40 in the axis direction is cut from the end edge 40b by a machining operation such as cutting and grinding. In this case, as illustrated in FIG. 5A, as a previous step, a peeling process that peels the resin layer 42a is performed. The axial length of the resin layer 42a that is peeled by this previous process is set to be longer than the axial length of the area (predetermined area cut by machining operation) in which the machining portion 43 is formed.

Next, in the machining operation step, as illustrated in FIG. 5B, the cylindrical tube 40 is machined with a machining device K to eliminate the outer surface of the original tube 41 and the coating layer 42 of a predetermined area in the axial direction from the end edge 40b. The machining portion 43 having an outer diameter smaller than that of the original tube 41 is thereby formed in the tube end portion 40a of the cylindrical tube 40. In the machining operation step, the outer surface of the original tube 41 is cut until the surface of the machining portion 43 is flattened (for example, 0.05 to 0.15 mm) by cutting the seam part step. However, the strength of the flared portion 12 is lowered if excessively cut. For this reason, the cut amount (cut depth) of the original tube 41 in the machining operation is set based on the surface roughness of the machining portion 43 and the required strength of the flared portion 12 after flaring.

The axial length of the machining portion 43 (length from end edge 40b cut by machining operation) is appropriately set to a length capable of forming the flare inclined plane 13 with the machining portion 43. More specifically, the axial length of the machining portion 43 is determined depending on the width of the flare inclined plane 13 in the diameter direction. After the machining operation step, as an after process, the outer circumferential corner portion of the leading end 43a of the machining portion 43 is chamfered to taper the leading end 43a.

In the flaring step, the cylindrical tube 40 is held when the cylindrical tube 40 is sandwiched between a fixed chuck K1 and a movable chuck K2, and the tube end portion 40a provided with the machining portion 43 faces an enlarged diameter punch P1 (refer to FIG. 6A). In this case, the cylindrical tube 40 is held in the horizontal direction.

After the cylindrical tube 40 is sandwiched between the fixed chuck K1 and the movable chuck K2, as a previous step (preforming), a diameter enlarging process that enlarges the diameter of the tube end portion 40a to be larger than that of the original tube 41 by pressing an enlarged diameter punch P1 into the tube end portion 40a of the cylindrical tube 40 is performed, as illustrated in FIG. 6B. In this diameter enlarging process, the diameter of the area from the end edge 40b (leading end 43a of machining portion 43) of the cylindrical tube 40 to the maximum outer diameter portion when the flared portion 12 is formed is enlarged. As the maximum diameter of the flared portion 12 is enlarged to be larger than the outer diameter of the original tube 41, the flared portion 12 can be formed to have an expected shape when being flared by performing the diameter enlarging process.

After the diameter enlarging process, as illustrated in FIG. 6C, while the cylindrical tube 40 is sandwiched between the fixed chuck K1 and the movable chuck K2, the pipe end portion 40a of the cylindrical tube 40 is cold pressed along the axial direction by a forming punch P2 to be plastically deformed. The portion of the cylindrical tube 40 pressed by the forming punch P2 becomes the flared portion 12, and the portion of the cylindrical tube 40 sandwiched by the fixed chuck K1 and the movable chuck K2 becomes the main tube portion 11, so that the flared tube 10 is manufactured. In this case, the tube end portion 40a of the cylindrical tube 40 is previously provided with the machining portion 43. Accordingly, the flare inclined plane 13 is formed with the machining portion 43 by aligning the area of the cylindrical tube 40 that becomes the flare inclined plane 13 when pressed by the forming punch P2 with the area of the cylindrical tube 40 in which the machining portion 43 is formed.

Hereinafter, the problem in the flare fitting structure 1 will be described.

The flared tube 10 for use in the flare fitting structure 1 is formed with the cylindrical tube 40 in which the original tube 41 made of a double-seamed steel tube is coated by the coating layer 42. In this case, as the original tube 41 is made of the double-seamed steel tube, the seam part step is created over the entire length of the surface of the original tube 41 along the side edge of the double-seamed steel plate. For this reason, even when the cylindrical tube 40 is formed by coating the original tube 41 with the coating layer 42, the irregularity portion 40c is created on the outer circumferential surface of the cylindrical tube 40.

When the flared portion 12 is formed by flaring the tube end portion 40a of the cylindrical tube 40, the irregularity is produced on the flare inclined plane 13 that faces the sealing surface 23 formed on the periphery of the opening portion of the flow channel 21 of the connected member 2 due to the irregularity portion 40c.

In the flaring, the flared portion 12 is formed by cold pressing the tube end portion 40a of the cylindrical tube 40. In this case, the tube end portion 40a is obliquely pressed for forming the flare inclined plane 13. A force toward the inside of the cylindrical tube 40 thereby acts onto the tube end portion 40a of the cylindrical tube 40, and an annular recess is created on the flare inclined plane 13. This recess causes the irregularity on the flare inclined plane 13.

If the flare inclined plane 13 has the irregularity, when the flared portion 12 is pressed by the flared nut 3, and the flare inclined plane 13 is pressed to the sealing surface 23, the gap is created between the flare inclined plane 13 and the sealing surface 23, and the liquid flowing between the flared tube 10 and the flow channel 21 may leak.

When a predetermined area of the (for example, exposed area of end surface of original tube 41) of the periphery of the opening portion of the flared tube 10 in the flare inclined plane 13 is only used as a sealing surface that contacts the sealing surface 23, the sealing surface is hardly affected by the irregularity on the flare inclined plane 13, so that a required sealing performance can be maintained. However, when a predetermined area of the periphery of the opening portion is only used as the sealing surface, the area of the sealing surface is reduced compared to the entire area of the flare inclined plane 13 is used as the sealing surface. For this reason, when the axis of the flared tube 10 is shifted from a defined position, the effective sealing surface is shifted from the connected member 2, so that the liquid flowing in the flared tube 10 and the flow channel 21 may leak. That is, it is desirable for the area of the sealing surface set on the flare inclined plane 13 to be wide, and it becomes difficult to maintain a stable sealing performance when the area of the sealing surface is small.

Hereinafter, the operation in the flare fitting structure and the method of manufacturing the flared tube 10 in the first embodiment will be described.

In the flare fitting structure 1 of the first embodiment, as illustrated in FIG. 1, the flared portion 12 formed in the end of the flared tube 10 faces the sealing surface 23 surrounding the flow channel 21 formed in the connected member 2, and the flared portion 12 is pressed by the flared nut 3 to connect the flared tube 10 to the connected member 2. In this case, the flared tube 10 is formed by flaring the tube end portion 40a of the cylindrical tube 40 having the original tube 41 and the coating layer 42 that coats the surface of the original tube 41. The flared portion 12 has the flare inclined plane 13 that faces the sealing surface 23, and the flare inclined plane 13 is formed with the machining portion 43 in which the circumferential surface of the original tube 41 is exposed by the machining operation.

Herein, the machining portion 43 is formed by cutting a predetermined area of the outer circumferential surface of the cylindrical tube 40 forming the flared tube 10 in the axis direction from the end edge 40b by the machining operation (for example, cutting and grinding), so as to eliminate the coating layer 42 and the outer surface of the original tube 41. In this case, the seam part step of the outer surface of the original tube 41 is ground to be a flat surface.

By forming the flare inclined plane 13 with the machining portion 43, the circumferential surface of the original tube 41 from which the seam part step is ground is exposed on the flare inclined plane 13 to be a flat surface. The entire area of the flare inclined plane 13 thereby becomes a flat plane without irregularity, and the irregularity on the flare inclined plane 13 can be prevented. When the flare inclined plane 13 is pressed onto the sealing surface 23 formed in the connected member 2, no gap is created, so that a high seal surface pressure can be maintained. As the flare inclined plane 13 has in the entire area thereof the flat plane without the irregularity, the entire area of the flare inclined plane 13 closely contacts the sealing surface 23, so that the entire area of the flare inclined plane 13 can be used as the sealing surface. The area of the sealing surface can be thereby enlarged compared to the sealing surface that uses only a predetermined area (for example, area in which end plane of original tube 41 is exposed) of the periphery of the opening portion of the flared tube 10. An effective sealing area can be thereby maintained even when the axis of the flared tube 10 is shifted from a defined position. As a result, the liquid flowing in the flared tube 10 is further prevented from leaking.

As the original tube 41 is made of the double-seamed steel tube, the seam part step is created over the entire length of the original tube 41, so that the irregularity portion 40c is formed on the surface of the cylindrical tube 40 due to such a seam part step. However, by cutting the outer surface of the original tube 41 by the machining operation, the irregularity portion 40c and the seam part step are ground. Accordingly, when the flared portion 12 is formed by flaring, the irregularity on the flare inclined plane 13 can be prevented because no recess due to the irregularity portion 40c remains on the flare inclined plane 13.

The method of manufacturing the flared tube 10 includes the machining operation step of forming the machining portion 43 having a diameter smaller than the outer diameter of the original tube 41 in the tube end portion 40a of the cylindrical tube 40 by cutting a predetermined area of the outer circumferential surface of the cylindrical tube 40 in the axis direction from the end edge 40b with the machining operation, and the flaring step of forming the flare inclined plane 13 with the machining portion 43 by forming the flared portion 12 in the tube end portion 40a by cold pressing the machining portion 43.

More specifically, the machining portion 43 is formed in the tube end portion 40a of the cylindrical tube 40 before the flared portion 12 is formed, and the flare inclined plane 13 is formed by cold pressing the tube end portion 40a in which the machining portion 43 is formed after the machining portion 43 is formed in the tube end portion 40a. As a result, the flare inclined plane 13 is appropriately formed with the machining portion 43, and the irregularity on the flare inclined plane 13 can be prevented.

In the first embodiment, as the after process of the machining operation step, the outer circumferential corner portion of the leading end 43a of the machining portion 43 is chamfered to have the tapered leading end 43a. Accordingly, when the tube end portion 40a of the cylindrical tube 40 is cold pressed in the flaring step, the boundary between the end plane and the circumferential surface of the original tube 41 gently inclines, and the opening periphery edge portion 12a surrounding the periphery of the opening portion 10a and the flare inclined plane 13 smoothly continue. The irregularity on the flare inclined plane 13 can be thereby further prevented.

In the first embodiment, as the previous step of the flaring step, the diameter enlarging process that enlarges the diameter of the tube end portion 40a of the cylindrical tube 40 is performed. Herein, the thickness of the machining portion 43 formed in the tube end portion 40a of the cylindrical tube 40 is thinner than that of the main portion (portion except machining portion 43) of the original tube 41 because the original tube 41 is cut. On the other hand, when a forming portion is pressed in the cold pressing, if the thickness of the forming portion is thin, a force that expands the forming portion outside lacks, so that the forming portion is twisted, and thus appropriate forming cannot be performed. More specifically, as the thickness of the machining portion 43 is thinner than that of the main portion of the original tube 41, it is difficult to obtain the flatness of the flare inclined plane 13 after the flaring. When the flared portion 12 does not have an appropriate shape, the flared portion 12 is collapsed before a desired axial force is applied when fastening the flared nut 3, resulting in the deterioration in the sealing performance. However, with the diameter enlarging process as the previous step of the flaring step to previously enlarge the diameter of the tube end portion 40a, the flared portion 12 can be formed to have an expected shape when the cold pressing is performed.

Hereinafter, results of sealing tests in the flare fitting structure 1 of the first embodiment and a flare fitting structure of a comparative example will be described.

In the sealing tests, the flared tube 10 of each of the test pieces 1 to 7 illustrated in FIG. 7 is used in the flare fitting structure 1 of the first embodiment and the flared tube of each of the test pieces 11 to 13 illustrated in FIG. 7 in the flare fitting structure of the comparative example is used. The condition of the liquid flowing in each flare fitting structure is the same.

Herein, in the flared tube 10 of each of the test pieces 1 to 7, the flare inclined plane 13 is formed with the machining portion 43 in which the circumferential surface of the original tube 41 is exposed by the machining operation. On the other hand, in the flared tube of each of the test pieces 11 to 13, the flare inclined plane is not machined, and the flared tube includes a sealing surface formed by exposing the end surface of the original tube on the opening periphery edge portion of the flared tube.

In the flare fitting structure 1 of the first embodiment using the flared tube 10 of each of the test pieces 1 to 7, no liquid leakage was confirmed. On the other hand, in the flare fitting structure of the comparative example, the liquid leakage occurs when a part of the flared pipes (test piece 11) was used.

As shown in FIG. 7, in the test pieces 1 to 7, the width W of the flare inclined plane 13 in the diameter direction (refer to FIG. 4) is 1.30 mm to 1.60 mm, and the outer diameter D of the original tube 41 (refer to FIG. 4) is 4.76 mm to 4.78 mm. The width W of the flare inclined plane 13 in the diameter direction relative to the outer diameter D of the original tube 41 is set to a width that establishes the following formula 1. That is, by setting the width W of the flare inclined plane 13 in the diameter direction to the width that establishes the following formula 1, the sealing performance is maintained in the flare fitting structure 1 of the first embodiment, and the liquid is prevented from leaking.

$$0.27D \leq W \leq 0.34D \quad \dots \text{Formula 1}$$

Further, as shown in FIG. 7, in each of the test pieces 1 to 7, the thickness t of the flare inclined plane 13 (refer to FIG. 4) is 0.60 mm to 0.65 and the thickness T of the original tube 41 (refer to FIG. 4) is 0.7mm to 0.69mm. The thickness t of the flare inclined plane 13 relative to the thickness T of the original tube 41 is set to a thickness that establishes the following formula 2. That is, by setting the thickness t of the flare inclined plane 13 to the thickness that establishes the following formula 2, the sealing performance can be maintained in the flare fitting structure 1 of the first embodiment, and the liquid can be prevented from leaking.

$$0.85T \leq t \leq 0.95T \quad \ldots \text{Formula 2}$$

Although the flare fitting structure and the method of manufacturing the flared tube according to the present disclosure are described based on the first embodiment as described above, the embodiment is not limited thereto, and any change in design and any addition are allowed without departing from the gist of the invention according to each of the claims.

In the first embodiment, an example in which an on-board equipment such as an ABS actuator is used as the connected member 2 to which the flared tube 10 is connected, and the flared portion 12 of the flared tube 10 faces the sealing surface 23 that surrounds the periphery of the opening portion of the flow channel 21 formed inside the connected member 2. However, it is not limited thereto. For example, as illustrated in FIG. 8, a second flared tube 100 in which a double flared portion 101 is formed in the end is used as the connected member. In this case, the flared portion 12 of the flared tube 10 faces an inside surface 101a of the double flared portion 101 of the second flared tube 100. The second flared tube 100 is inserted into a female nut 102 into which the flared nut 3 is inserted, and a back surface 101b of the double flared portion 101 interferes with a level difference surface 102a formed on the inner circumferential surface of the female nut 102. The flared nut 3 is fastened when the screw groove 32 is screwed on a screw groove 102b formed on the inner circumferential surface of the female nut 102. As a result, the flared portion 12 is sandwiched between the leading end 3a of the flared nut 3 and the double flared portion 101 of the second flared tube 100, and the flared tube 10 is connected to the second flared tube 100 as the connected member.

In the first embodiment, an example in which the double-seamed steel tube is used as the original tube 41. However, it is not limited thereto, and a single-seamed steel tube or a seamless tube may be used.

In the first embodiment, an example in which the flare inclined plane 13 is formed with the machining portion 43 by flaring the tube end portion 40a in which the machining portion 43 is formed after the machining portion 43 is formed in the tube end portion 40a of the cylindrical tube 40 formed in the flared tube 10 by the machining operation. However, the flare inclined plane 13 may be formed with the machining portion 43 by the machining operation to the flare inclined plane 13 after the flared portion 12 is formed in the tube end portion 40a of the cylindrical tube 40 by flaring as long as the flare inclined plane 13 is formed with the machining portion 43 in which the circumferential surface of the original tube 41 is exposed.

CROSS-REFERENCE TO RELATED APPLICATION

The present application is based on and claims priority to Japanese Patent Application No. 2019-206452, filed on November 14, 2019, the disclosure of which is hereby incorporated by reference in its entirety.

**Claims**

1.  A flare fitting structure in which a flared portion formed in an end of a flared tube faces a connected member and the flared portion is pressed by a flared nut to connect the flared tube to the connected member, wherein

    the flared tube is formed by flaring a cylindrical tube including an original tube and a coating layer that coats a surface of the original tube,
    the flared portion includes a flare inclined plane that faces the connected member, and
    the flare inclined plane is formed with a machining portion in which the original tube is exposed by a machining operation.

2.  The flare fitting structure according to claim 1, wherein

    the machining portion is formed in a tube end portion of the cylindrical tube by cutting a predetermined area of an outer circumferential surface of the cylindrical tube in an axis direction from an end edge by the machining operation, and
    the flare inclined plane is formed with the machining portion by flaring the tube end portion in which the machining portion is formed.

3.  The flare fitting structure according to claim 1 or claim 2, wherein
    a width W of the flare inclined plane in a diameter direction relative to a diameter D of the original tube is set to be a width that establishes a following formula 1.

$$0.27D \leq W \leq 0.34D \quad \ldots \text{Formula 1}$$

4.  The flare fitting structure according to any one of claims 1 to 3, wherein
    a thickness t of the flare inclined plane relative to a thickness T of the original tube is set to be a thickness that establishes a following formula 2.

$$0.85T \le t \le 0.95T \quad \ldots \text{ Formula } 2$$

**5.** A method of manufacturing a flared tube, comprising:

a machining operation step of forming a machining portion having an outer diameter smaller than that of an original tube in a tube end portion of a cylindrical tube by cutting a predetermined area of an outer circumferential surface of the cylindrical tube including the original tube and a coating layer that coats a surface of the original tube in an axial direction from an end edge, and a flaring step of forming a flare inclined plane of a flared portion that faces a connected member with the machining portion by forming the flared portion in the tube end portion by pressing the machining portion.

# FIG.1

# FIG.2

# FIG.3

# FIG.4

# FIG.5A

40b

K

40a

40

40c

41

42

42a

# FIG.5B

43a(40b)

K

43

40c

40

41

42

42a

# FIG.6A

P1

43a(40b)

40a

41

43

40

K2

K1

42

42a

# FIG.6B

# FIG.6C

# FIG.7

| | | MEASUREMENT RESULT (UNIT : mm) | | | | SEALING TEST |
|---|---|---|---|---|---|---|
| | | OUTER DIAMETER D OF ORIGINAL TUBE | THICKNESS T OF ORIGINAL TUBE | THICKNESS t OF FLARE INCLINED PLANE | WIDTH W OF FLARE INCLINED PLANE IN DIAMETER DIRECTION | LEAKAGE |
| FIRST EMBODIMENT | TEST PIECE 1 | 4.77 | 0.69 | 0.60 | 1.40 | NO |
| | TEST PIECE 2 | 4.76 | 0.69 | 0.65 | 1.30 | NO |
| | TEST PIECE 3 | 4.76 | 0.7 | 0.63 | 1.40 | NO |
| | TEST PIECE 4 | 4.76 | 0.69 | 0.61 | 1.55 | NO |
| | TEST PIECE 5 | 4.78 | 0.69 | 0.64 | 1.45 | NO |
| | TEST PIECE 6 | 4.76 | 0.7 | 0.60 | 1.60 | NO |
| | TEST PIECE 7 | 4.76 | 0.7 | 0.65 | 1.45 | NO |
| COMPARATIVE EXAMPLE | TEST PIECE 11 | 4.76 | 0.7 | 0.69 | 1.65 | YES |
| | TEST PIECE 12 | 4.77 | 0.7 | 0.69 | 1.60 | NO |
| | TEST PIECE 13 | 4.76 | 0.7 | 0.68 | 1.55 | NO |

EP 4 060 213 A1

FIG.8

**INTERNATIONAL SEARCH REPORT**

International application No.

PCT/JP2020/042088

### A. CLASSIFICATION OF SUBJECT MATTER
F16L 13/14(2006.01)i; B21D 39/04(2006.01)i; B21D 51/16(2006.01)i; F16L 19/04(2006.01)i
FI: F16L13/14; F16L19/04; B21D39/04 D; B21D51/16 B
According to International Patent Classification (IPC) or to both national classification and IPC

### B. FIELDS SEARCHED
Minimum documentation searched (classification system followed by classification symbols)
F16L13/14; B21D39/04; B21D51/16; F16L19/04

Documentation searched other than minimum documentation to the extent that such documents are included in the fields searched
| | |
|---|---|
| Published examined utility model applications of Japan | 1922–1996 |
| Published unexamined utility model applications of Japan | 1971–2021 |
| Registered utility model specifications of Japan | 1996–2021 |
| Published registered utility model applications of Japan | 1994–2021 |

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| X<br>Y | JP 2014-059051 A (TI AUTOMOTIVE (HEIDELBERG) GMBH) 03 April 2014 (2014-04-03) claims, paragraphs [0010]-[0021], fig. 1-3 | 1-2, 5<br>3-4 |
| X<br>Y | JP 2000-161567 A (FUJI HEAVY INDUSTRIES LTD.) 16 June 2000 (2000-06-16) claims, paragraphs [0022]-[0030], fig. 1-3 | 1-2, 5<br>3-4 |
| X<br>Y | DE 102015105798 A1 (COOPER-STANDARD AUTOMOTIVE(DEUTSCHLAND) GMBH) 28 July 2016 (2016-07-28) claims, paragraphs [0032]-[0042], fig. 1-3 | 1-2, 5<br>3-4 |
| Y | JP 09-502009 A (ITT MANUFACTURING ENTERPRISES, INC.) 25 February 1997 (1997-02-25) page 31, line 19 to page 32, line 6, table 1, fig. 11 | 3-4 |
| Y | JP 57-037179 A (USUI CO., LTD.) 01 March 1982 (1982-03-01) page 2, upper left column, line 7 to lower left column, line 19, fig. 1-3 | 4 |

☒ Further documents are listed in the continuation of Box C. ☒ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 05 January 2021 (05.01.2021) | 19 January 2021 (19.01.2021) |

| Name and mailing address of the ISA/<br>Japan Patent Office<br>3-4-3, Kasumigaseki, Chiyoda-ku,<br>Tokyo 100-8915, Japan | Authorized officer<br><br>Telephone No. |
|---|---|

Form PCT/ISA/210 (second sheet) (January 2015)

| | INTERNATIONAL SEARCH REPORT | International application No. |
|---|---|---|
| | | PCT/JP2020/042088 |

C (Continuation).   DOCUMENTS CONSIDERED TO BE RELEVANT

| Category* | Citation of document, with indication, where appropriate, of the relevant passages | Relevant to claim No. |
|---|---|---|
| A | JP 11-218269 A (TOYOTA MOTOR CORP.) 10 August 1999 (1999-08-10) entire text, all drawings | 1-5 |
| A | JP 2018-532084 A (SAPA AS) 01 November 2018 (2018-11-01) entire text, all drawings | 1-5 |

Form PCT/ISA/210 (continuation of second sheet) (January 2015)

INTERNATIONAL SEARCH REPORT

Information on patent family members

International application no.

PCT/JP2020/042088

| Patent Documents referred in the Report | Publication Date | Patent Family | Publication Date |
|---|---|---|---|
| JP 2014-059051 A | 03 Apr. 2014 | US 2014/0001749 A1 claims, paragraphs [0010]-[0024], fig. 1-3 EP 2679873 A1 KR 10-2014-0002554 A CN 103574185 A | |
| JP 2000-161567 A | 16 Jun. 2000 | (Family: none) | |
| DE 102015105798 A1 | 28 Jul. 2016 | WO 2016/116558 A1 claims, page 9, line 1 to page 14, line 2, fig. 1-3 EP 3129691 A1 | |
| JP 09-502009 A | 25 Feb. 1997 | US 5529349 A column 12, line 23 to page 13, line 27, table 1, fig. 11 WO 1995/006219 A1 EP 893640 A1 | |
| JP 57-037179 A | 01 Mar. 1982 | (Family: none) | |
| JP 11-218269 A | 10 Aug. 1999 | (Family: none) | |
| JP 2018-532084 A | 01 Nov. 2018 | US 2018/0313477 A1 entire text, all drawings WO 2017/064028 A1 EP 3362725 A KR 10-2018-0066201 A CN 108351055 A | |

Form PCT/ISA/210 (patent family annex) (January 2015)

**EP 4 060 213 A1**

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008190580 A
- JP 2019206452 A